# EUROPÄISCHE PATENTSCHRIFT

(11) **EP 0 657 389 B1**
(45) Veröffentlichungstag und Bekanntmachung des Hinweises auf die Patenterteilung: **28.10.1998**
(21) Anmeldenummer: 94119020.9
(22) Anmeldetag: 02.12.1994
(51) Int. Cl.: C02F 3/06

(54) **Verfahren und Vorrichtung zum biologischen Reinigen von Wasser**
Method and apparatus for the biological purification of water
Procédé et dispositif pour l'épuration biologique des eaux

(30) Priorität: 08.12.1993 DE 4341805
(43) Veröffentlichungstag der Anmeldung: 14.06.1995
(73) Patentinhaber: Hans Brochier GmbH & Co, D-90482 Nürnberg (DE)
(72) Erfinder: Klein, Hans-Ulrich, D-97688 Bad Kissingen (DE)
(74) Vertreter: Sparing - Röhl - Henseler Patentanwälte

(56) Entgegenhaltungen:
- EP-A- 0 356 870
- EP-A- 0 389 958
- FR-A- 2 593 168
- US-A- 4 931 183
- US-A- 5 126 042

## Beschreibung

Die vorliegende Erfindung betrifft ein Verfahren zum biologischen Reinigen von Wasser, insbesondere von vorgereinigtem Abwasser, in einem von unten nach oben durchströmten Schwimmkornfilter, in dem Schwimmkorn durch einen Siebboden von Sich darüber sammelnden Reinwasser getrennt wird, wobei das zu reinigende Rohwasser mit für die biologische Reinigung benötigtem Gas versorgt und durch die biologische Reinigung verunreinigtes Schwimmkorn gespült wird, wobei beim Spülen von Schwimmkorn abgetrennte Verunreinigungen in einem am unteren Ende des Schwimmkornfilters ausgebildeten Schlammeindicker gesammelt werden, sowie eine Vorrichtung zum biologischen Reinigen von Wasser, insbesondere von vorgereinigtem Abwasser, mit einem Schwimmkornfilter, in dem sich ein Siebboden zum Begrenzen des Schwimmkornbereichs gegenüber darüber befindlichem Reinwasser angeordnet ist und dessen Unterteil einen Schlammeindicker bildet, wobei eine Zuleitung für zu reinigendes Rohwasser unterhalb des Schwimmkornbereichs mündet, wobei eine Fördervorrichtung für Schwimmkorn und Reinwasser vorgesehen ist, die eine in die Zuleitung führende Verbindungsleitung umfaßt.

Die biologische Reinigung von Wasser ist insbesondere im Hinblick auf die kommunale oder industrielle Abwasserreinigung, d.h. zur Gewinnung von Brauch- und Trinkwasser bedeutsam. Zur Vorreinigung sind üblicherweise Sammel- oder Vorklärbecken vorgesehen, denen eine biologische Reinigungsstufe nachgeschaltet ist. Die biologische Reinigungsstufe besteht häufig aus einem Filterbehälter, den das vorgereinigte Abwasser durchströmt und dabei mit einem Gas, etwa Luft und/oder reinem Sauerstoff für eine aerobe Reinigung und etwa Wasserstoff und/oder Methan für eine anaerobe Reinigung, sowie mit im Wasser dispergierten geeigneten Filtermaterialien wechselwirkt.

Aus der EP-A-0 389 958 ist ein Verfahren zum biochemischen Aufbereiten wie zur Denitrifikation von Wasser bekannt, bei dem das Rohwasser über ein durch einen horizontalen Düsenboden nach oben begrenztes Schwimmkornfilter geleitet wird, das Mikroorganismen als Träger bzw. Bewuchsfläche dient, und bei dem in Abständen ein Spülvorgang zum Entfernen von Biomasse aus dem Schwimmkornfilter durchgeführt wird. Hierbei wird zusätzlich zu dem Spülvorgang mittels einer Wasserstrahlpumpe mit Biomasse beladenes Filtermaterial aus der oberen Zone des Filters entfernt und das in der Wasserstrahlpumpe gereinigte Trägermaterial zusammen mit der Biomasse auf die Rohwasserseite des Schwimmkornfilters zurückgeführt. Hierdurch können die Spülvorgänge verkürzt und die Spülabstände verlängert werden, da durch das Abziehen eine Vorreinigung und Auflockerung bewirkt wird.

Aus der EP-B-0 227 081 ist es bekannt, zu reinigendes Wasser durch einen mit einem Sauerstoffdruck beaufschlagten, geschlossenen Tropfkörper, der als Biofilmträger dient, zu führen, von wo das Wasser in ein den Tropfkörper umgebendes Schwimmkorn-Druckfilter gelangt. In letzterem sammelt sich das Reinwasser über dem als Filtermaterial dienenden, von einem Siebboden nach oben begrenzten Schwimmkorn, während sich über dem gereinigten Wasser ein Luftpolster befindet. Der zur Biofiltrierung im Druckfilter benötigte Sauerstoff wird vom Rohwasser noch im Tropfkörperbereich aufgenommen, so daß bei der Biofiltrierung verbrauchter Sauerstoff nicht ersetzt werden kann. Die Reinigung des Schwimmkorns von Schmutzpartikeln erfolgt durch Öffnen eines Abgasventils am oberen Ende des Tropfkörpers. Hierdurch drückt das Luftpolster gereinigtes Wasser durch das Schwimmkorn-Druckfilter stoßartig nach unten, wodurch das Schwimmkorn gespült wird. Die vom Schwimmkorn abgespülten Schmutzpartikel werden in einem unterhalb des Tropfkörpers befindlichen Schlammeindicker gesammelt. Die stoßweise Reinigung des Schwimmkorns unterbricht jedoch die biologische Reinigung des Wassers, nach der der Sauerstoffdruck erneut aufgebaut werden muß. Zur Verfahrensdurchführung ist darüber hinaus eine aufwendige Vorrichtung notwendig, die mindestens zwei in Verbindung stehende Druckbehälter sowie mindestens zwei Siebböden umfaßt.

Aus der DE-C-3 338 170 ist es bekannt, zu reinigendes Wasser durch einen Schwimmkorn enthaltenden Filterbehälter von oben nach unten strömen zu lassen, um eine biologische Reinigung vorzunehmen. Die Reinigung des Schwimmkorns erfolgt in einem getrennten, tiefergelegenen Waschbehälter, welcher mit dem Filterbehälter in Verbindung steht. Schwimmkorn wird dem Filterbehälter am oberen Ende entnommen und gelangt auf Grund der zwischen dem Filterbehälter und dem Waschbehälter bestehenden Druckdifferenz in den Waschbehälter, wird dort mit Reinwasser gespült und gelangt über Auftriebskräfte wieder in den Filterbehälter. Dies erfordert einen hohen apparativen Aufwand. Das Schwimmkorn wird chargenweise gespült.

Aufgabe der Erfindung ist es, ein Verfahren und eine Vorrichtung zum biologischen Reinigen von Wasser der eingangs genannten Art zu schaffen, bei dem eine kontinuierliche Biofiltration bei kontinuierlicher Filterspülung und vermindertem apparativem Aufwand erfolgt.

Gegenstand der Erfindung ist daher ein Verfahren der eingangs genannten Art, bei dem bei kontinuierlicher Biofiltrierung des Rohwassers das Schwimmkorn im Kreislauf geführt wird, indem kontinuierlich ein Teil des Reinwassers mit einem Schwimmkornanteil an der Spitze des kegelförmig ausgebildeten Siebbodens abgezogen und in die Zufuhr für Rohwasser unter Spülen des mitgeführten Schwimmkornanteils eingeführt wird.

Gegenstand der Erfindung ist ferner eine Vorrichtung der eingangs genannten Art, bei der die Verbindungsleitung von der Spitze des kegelförmig ausgebildeten Siebbodens ausgeht.

Hierbei werden ungereinigte Flüssigkeit und ein aus dem Reinwasserbereich abgezogener Teilstrom der gereinigten Flüssigkeit, der Schwimmkorn enthält, durch eine zweckmäßigerweise vom zu reinigenden Rohwasser betriebenen Fördereinrichtung gemischt, wodurch das Schwimmkorn in der Zuleitung für Rohwasser kontinuierlich gespült und ein kontinuierlicher, durch das Schwimmkornfilter verlaufender ReinigungsKreislauf aufrechterhalten wird. Der Spülvorgang erfolgt insbesondere durch verwirbelndes Injizieren des Schwimmkorns in die Zuleitung für Rohwasser. Das Verfahren ermöglicht es insbesondere, das zur Bioreinigung benötigte Gas kontinuierlich und im Überschuß in die Zuleitung für das Rohwasser zuzugeben, so daß sich das Gas entsprechend seinem Verbrauch direkt nachlösen kann, während sich unverbrauchtes Gas über dem Reinwasser als Gaspolster sammelt. Hierdurch wird die Reinigungsleistung erhöht. Das Gas kann dann aus dem Gaspolster kontinuierlich wieder entnommen und dem Rohwasser erneut zugesetzt werden.

Weitere Ausgestaltungen der Erfindung sind der nachfolgenden Beschreibung sowie den Unteransprüchen zu entnehmen.

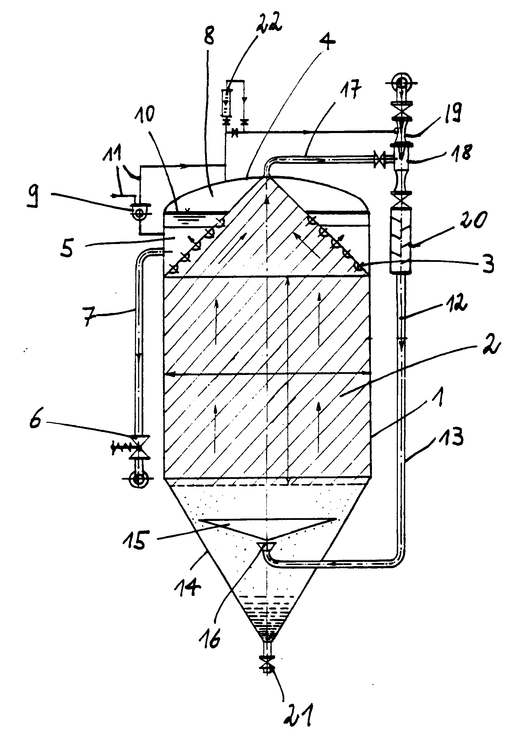

Die Erfindung wird im folgenden anhand eines in der beigefügten Abbildung schematisch im Schnitt dargestellten Ausführungsbeispiels einer Vorrichtung zum biologischen Reinigen von Wasser näher erläutert.

Gemäß der Abbildung ist ein Schwimmkornfilter 1 vorgesehen, in dem sich als Filtermaterial Schwimmkorn 2 unterhalb eines kegelförmigen, mit der Kegelspitze nach oben zeigenden Siebbodens 3 befindet. Die Korngröße des Schwimmkorns 2 beträgt vorteilhafterweise 1,5 mm bis 2 mm bei einer spezifischen Oberfläche von 1500 bis 2000 m²/m³. Der Siebboden 3 endet zweckmäßigerweise an einer oberen Wandung 4 des Schwimmkornfilters 1 und trennt das bei der biologischen Reinigung (Biofiltration) gereinigte Reinwasser 5, welches sich über dem Siebboden 3 sammelt, vom Bereich des Schwimmkorns 2. Die Entnahme von Reinwasser 5 aus dem Schwimmkornfilter 1 erfolgt über eine mit einem Überdruckventil 6 versehene Reinwasserleitung 7.

Damit sich über dem Reinwasser 5 ein Gaspolster 8 aus dem für die biologische Reinigung verwendeten Gas (für eine aerobe Biofiltration wird zweckmäßigerweise mit Sauerstoff angereicherte Luft oder reiner Sauerstoff verwendet, für eine anaerobe Biofiltration verwendet man zweckmäßigerweise Methan oder Wasserstoff) ausbilden kann, ist das Schwimmkornfilter 1 gemäß dem dargestellten Ausführungsbeispiel ein Schwimmkorn-Druckfilter mit einem Druckgefäß. Der Druck des Gaspolsters 8 wird über einen Niveauregler 9, der über den Wasserspiegel 10 des Reinwassers 5 gesteuert wird, und durch Kontrolle der Gaslöslichkeit konstant gehalten, indem verbrauchtes Gas von außen über eine Gasleitung 11 ersetzt wird.

Rohwasser 12 strömt durch eine Zuleitung 13 in den unteren, als trichterförmigen Schlammeindicker 14 ausgebildeten Bereich des Schwimmkornfilters 1, in dem eine kegelförmige, mit der Kegelspitze nach unten gerichtete Prallplatte 15 zentrisch und unterhalb des Schwimmkornbereichs angeordnet ist. Dort tritt das Rohwasser 12 aus einer unterhalb der kegelförmigen Prallplatte 15 befindlichen Mündung 16 der Zuleitung 13 aus und durchströmt das Schwimmkornfilter 1 von unten nach oben, um sich über dem Siebboden 3 als Reinwasser zu sammeln.

Von der Kegelspitze des Siebbodens 3, der im Bereich des Gaspolsters 8 geschlossen ist, ausgehend führt eine Verbindungsleitung 17 vom Schwimmkornfilter 1 zur Zuleitung 13 und ist mit letzterer durch eine als Strahlpumpe 18 ausgebildete Fördereinrichtung verbunden. Die Strahlpumpe 18 wird durch das Rohwasser 12 angetrieben und fördert - unterstützt durch das Gaspolster 8 - kontinuierlich einen Teil des Reinwassers 5, das mit einem entsprechenden Schwimmkornanteil von der Unterseite des Siebbodens 3 über die Verbindungsleitung 17 abgezogen wird, in die Zuleitung 13 für die kontinuierliche Zufuhr von Rohwasser unter Spülen des mitgeführten Schwimmkornanteils in der Strahlpumpe 18. Durch die Strahlpumpe 18 wird das Schwimmkorn unter Verwirbelung in das Rohwasser injiziert und dadurch eine intensive Reinigungswirkung auf das Schwimmkorn ausgeübt. Der Betriebsdruck des Rohwassers kann etwa 4 bis 5 bar bei einer Zufuhrmenge von beispielsweise 15 m³/h betragen.

Darüber hinaus kann sich in der Zuleitung 13 stromabwärts zur Strahlpumpe 18 eine beispielsweise mit Schikanen versehene Nachspülvorrichtung 20 befinden, die vom Mischwasser wirbelnd durchlaufen wird und zur Reinigung des Schwimmkorns beiträgt.

Da die Zuleitung 13 in dem Bereich des Schlammeindickers 14 mündet, wird das Schwimmkorn 2 dem Schwimmkornfilter 1 kontinuierlich wieder zugeführt. An der Mündung 16 der Zuleitung 13 tritt das Schwimmkorn 2 gemeinsam mit dem Rohwasser und den vom eingespülten Schwimmkorn 2 abgetrennten Schmutzteilen aus und steigt wieder auf, während die Schmutzteile im Schlammeindicker 14 sedimentieren. Die Prallplatte 15 gewährleistet eine zuverlässige Trennung der Schmutzteile vom entlang der kegelförmigen Prallplatte 15 aufsteigenden Schwimmkorn 2. Der Schlammeindicker 14 verfügt an seinem unteren Ende über ein Ventil 21, daß die Entnahme von sedimentiertem Klärschlamm ermöglicht.

Die Zuleitung 13 ist ferner mit einem Gasinjektor 19 zum Injizieren des für die biologische Reinigung benötigten Gases versehen, der im dargestellten Ausführungsbeispiel der Strahlpumpe 18 vorgeschaltet ist. Über den Gasinjektor 19 wird der Zustrom des dem Rohwasser 12 zugemischten Gases aus dem Gaspolster 8 bzw. aus einer Gasquelle über die Gasleitung 11 gedeckt und ist über einen Gasströmungsmesser 22, der dem Gasinjektor 19 vorgeschaltet ist, kontrollierbar. Die Anordnung des Gasinjektors 19 in der Zuleitung 13 erlaubt eine direkte Nachlösung von Gas an Ort und Stelle im Schwimmkornfilter 1 entsprechend dem Verbrauch des Gases bei der Biofiltration, während im Überschuß mitgeführtes und ungelöst gebliebenes Gas im Gaspolster 8 gesammelt wird.

Der Siebboden 3 kann auch unterhalb der oberen Wandung 4, zum Beispiel im Bereich des Reinwassers 5, mit seiner Kegelspitze enden, wobei dann die Verbindungsleitung 17 entsprechend zu verlängern ist.

Anstelle der keine Fremdenergie benötigenden Strahlpumpe 18 kann auch eine andere, beispielsweise elektromotorisch betriebene, in der Zuleitung 17 angeordnete Pumpe verwendet und ferner kann auf die Ausbildung eines Gaspolsters 8 verzichtet werden.

## Patentansprüche

1. Verfahren zum biologischen Reinigen von Wasser, insbesondere von vorgereinigtem Abwasser, in einem von unten nach oben durchströmten Schwimmkornfilter (1), in dem Schwimmkorn durch einen Siebboden (3) von sich darüber sammelnden Reinwasser getrennt wird, wobei das zu reinigende Rohwasser mit für die biologische Reinigung benötigtem Gas versorgt und durch die biologische Reinigung verunreinigtes Schwimmkorn (2) gespült wird, wobei beim Spülen von Schwimmkorn (2) abgetrennte Verunreinigungen in einem am unteren Ende des Schwimmkornfilters (1) ausgebildeten Schlammeindicker (14) gesammelt werden, **dadurch gekennzeichnet,** daß bei kontinuierlicher Biofiltrierung des Rohwassers (12) das Schwimmkorn (2) im Kreislauf geführt wird, indem kontinuierlich ein Teil des Reinwassers (5) mit einem Schwimmkornanteil an der Spitze des kegelförmig ausgebildeten Siebbodens (3) abgezogen und in die Zufuhr für Rohwasser unter Spülen des mitgeführten Schwimmkornanteils eingeführt wird.

2. Verfahren nach Anspruch 1, dadurch gekennzeichnet, daß für die biologische Reinigung benötigtes Gas kontinuierlich dem dem Schwimmkornfilter (1) zuzuführenden Rohwasser zugemischt wird.

3. Verfahren nach Anspruch 2, dadurch gekennzeichnet, daß das für die biologische Reinigung benötigte Gas im Überschuß zugemischt wird, wobei nicht umgesetztes Gas in einem Gaspolster (8) über dem Reinwasser gesammelt wird.

4. Verfahren nach Anspruch 3, dadurch gekennzeichnet, daß Gas aus dem Gaspolster (8) und/oder einer Gasquelle kontinuierlich dem Rohwasser zugemischt wird.

5. Vorrichtung zum biologischen Reinigen von Wasser, insbesondere von vorgereinigtem Abwasser, mit einem Schwimmkornfilter (1), in dem sich ein Siebboden (3) zum Begrenzen des Schwimmkornbereichs gegenüber darüber befindlichem Reinwasser (5) angeordnet ist und dessen Unterteil einen Schlammeindicker (14) bildet, wobei eine Zuleitung (13) für zu reinigendes Rohwasser (12) unterhalb des Schwimmkornbereichs mündet, wobei eine Fördervorrichtung für Schwimmkorn (2) und Reinwasser (5) vorgesehen ist, die eine in die Zuleitung (13) führende Verbindungsleitung (17) umfaßt, dadurch gekennzeichnet, daß die Verbindungsleitung von der Spitze des kegelförmig ausgebildeten Siebbodens (3) ausgeht.

6. Vorrichtung nach Anspruch 5, dadurch gekennzeichnet, daß die Fördereinrichtung eine durch das Rohwasser (12) betreibbare Strahlpumpe (18) umfaßt.

7. Vorrichtung nach Anspruch 5 oder 6, dadurch gekennzeichnet, daß ein Gasinjektor (19) für zur biologischen Reinigung benötigtes Gas aus einem über dem Reinwasser (5) befindlichen Gaspolster (8) und/oder einer Gasquelle in die Zuleitung (13) vorgesehen ist.

8. Vorrichtung nach Anspruch 7, dadurch gekennzeichnet, daß dem Gasinjektor (19) ein Gasströmungsmesser (22) vorgeschaltet ist.

9. Vorrichtung nach einem der Ansprüche 5 bis 8, dadurch gekennzeichnet, daß die Zuleitung (13) stromabwärts von der Fördereinrichtung eine verwirbelnde Nachspüleinrichtung (20) aufweist.

10. Vorrichtung nach einem der Ansprüche 5 bis 9, dadurch gekennzeichnet, daß über der Mündung (16) der Zuleitung (13) im Schwimmkornfilter (1) eine zentrisch angeordnete Prallplatte (15) vorgesehen ist.

11. Vorrichtung nach Anspruch 10, dadurch gekennzeichnet, daß die Prallplatte (15) kegelförmig und mit der Kegelspitze nach unten gerichtet ist.

12. Vorrichtung nach einem der Ansprüche 5 bis 11, dadurch gekennzeichnet, daß der Siebboden (3) kegelförmig ausgebildet ist.

## Claims

1. Process for the biological cleaning of water, in particular of pre-cleaned water, in a floating grain filter (1) flowed through from bottom to top, in which the floating grain is separated from the pure water collecting above through a perforated floor (3), whereby the untreated water to be cleaned is supplied with the gas necessary for biological cleaning and the floating grain (2) polluted by the biological cleaning is rinsed, whereby pollutants separated during the rinsing of the floating grain (2) are collected in a sludge thickener (14) formed at the lower end of the floating grain filter (1), characterized in that, in the course of the continuous bio-filtration of the untreated water (12), the floating grain (2) is supplied in a circuit, whereby part of the pure water (5) is continuously removed with a floating grain component at the top of the spherically shaped perforated floor (3) and introduced into the feed for untreated water while the floating grain component also carried along is rinsed.

2. Process in accordance with claim 1, characterized in that gas necessary for the biological cleaning is continuously mixed with the untreated water being supplied to the floating grain filter (1).

3. Process in accordance with claim 2, characterized in that the gas necessary for the biological cleaning is admixed in excess, whereby unconverted gas is collected in a gas cushion (8) above the pure water.

4. Process in accordance with claim 3, characterized in that gas from the gas cushion (8) and/or a gas source is continuously mixed with the untreated water.

5. Device for the biological cleaning of water, in particular of pre-cleaned waste water, with a floating grain filter (1) in which a perforated floor (3) is positioned for the delineation of the floating grain area in respect of the pure water located above (5) and the lower section of which forms a sludge thickener (14), whereby a delivery pipe (13) for the untreated water to be cleaned (12) discharges below the floating grain area, whereby a conveying device for floating grain (2) and pure water (5) is provided which comprises a connecting pipe (17) leading into the delivery pipe (13), characterized in that the connecting pipe proceeds from the top of the spherically shaped perforated floor (3).

6. Device in accordance with claim 5, characterized in that the conveying unit comprises a jet pump (18) operated by the untreated water (12).

7. Device in accordance with claim 5 or 6, characterized in that a gas injector (19) is provided for the gas necessary for the biological cleaning from a gas cushion (8) located above the pure water (5) and/or from a gas source in the feed pipe (13).

8. Device in accordance with claim 7, characterized in that a gas flowmeter (22) is connected with the gas injector (19).

9. Device in accordance with one of claims 5 to 8, characterized in that the feed pipe (13) exhibits a vorticing re-rinsing device (20) downstream from the conveying unit.

10. Device in accordance with one of claims 5 to 9, characterized in that a centred bounce plate (15) is provided above the mouth (16) of the feed pipe (13) in the floating grain filter (1).

11. Device in accordance with claim 10, characterized in that the bounce plate (15) is cone-shaped with the apex of the cone pointing downwards.

12. Device in accordance with one of claims 5 to 11, characterized in that the perforated bottom (3) is cone-shaped.

## Revendications

1. Procédé d'épuration d'eau par voie biologique, notamment d'eaux usées ayant subi une épuration préliminaire, mis en oeuvre dans un filtre (1) à grains flottants, parcouru d'un courant dirigé de bas en haut, filtre dans lequel les grains flottants, séparés de l'eau épurée par un fond perforé (3), viennent se collecter au-dessus de ce fond, un gaz nécessaire pour l'épuration biologique étant incorporé à l'eau brute destinée à l'épuration, et les grains flottants (2) pollués par l'épuration biologique étant rincés, tandis que des impuretés séparées lors du rinçage des grains flottants (2) viennent se collecter dans un décanteur (14) présent à l'extrémité inférieure du filtre (1) à grains flottants, caractérisé en ce que lors de la biofiltration continue de l'eau brute (12), les grains flottants (2) sont mis en circulation du fait que, de manière continue, une partie de l'eau épurée (5), accompagnée d'une partie des grains flottants, est évacuée au sommet du fond perforé (3) de forme conique, et introduite dans le circuit d'alimentation de l'eau brute avec rinçage simultané de la partie des grains flottants ainsi entraînée.

2. Procédé selon la revendication 1, caractérisé en ce que le gaz nécessaire pour l'épuration biologique est mélangé de manière continue à l'eau brute destinée à alimenter le filtre (1) à grains flottants.

3. Procédé selon la revendication 2, caractérisé en ce que le gaz nécessaire pour l'épuration biologique est amené en une quantité excédentaire, le gaz non transformé venant se collecter au-dessus de l'eau épurée en formant un coussin de gaz (8).

4. Procédé selon la revendication 3, caractérisé en ce que du gaz provenant du coussin de gaz (8) et/ou d'une source de gaz est mélangé de manière continue à l'eau brute.

5. Dispositif d'épuration d'eau par voie biologique, notamment d'eaux usées ayant subi une épuration préliminaire, comportant un filtre (1) à grains flottants, dans lequel est disposé un fond perforé (3) destiné à imiter la région des grains flottants à l'égard de l'eau épurée (5) se trouvant dessus, et dont la partie inférieure constitue un décanteur (14), une conduite d'alimentation (13) pour l'eau brute (12) destinée à l'épuration débouchant sous la région occupée par les grains flottants, avec présence d'un dispositif transporteur pour les grains flottants (2) et l'eau épurée (5), qui comprend une conduite de liaison (17) conduisant vers la conduite d'alimentation (13), caractérisé en ce que la conduite de liaison part du sommet du cône qui forme le fond perforé (3).

6. Dispositif selon la revendication 5, caractérisé en ce que le dispositif transporteur comprend une pompe à jet (18) dont le fluide moteur peut être l'eau brute (12).

7. Dispositif selon la revendication 5 ou 6, caractérisé par la présence d'un injecteur à gaz (19) pour injecter dans la conduite d'alimentation (13) le gaz nécessaire à l'épuration biologique provenant d'un coussin de gaz (8) se trouvant au-dessus de l'eau épurée (5) et/ou d'une source de gaz.

8. Dispositif selon la revendication 7, caractérisé en ce qu'en amont de l'injecteur de gaz (19) est monté un débitmètre à gaz (22).

9. Dispositif selon l'une des revendications 5 à 8, caractérisé en ce que la conduite d'alimentation (13) présente en aval du dispositif transporteur un dispositif de rinçage complémentaire (20) à tourbillons.

10. Dispositif selon l'une des revendications 5 à 9, caractérisé par la présence d'une chicane (15) disposée centralement dans le filtre (1) à grains flottants au-dessus de l'embouchure (16) de la conduite d'alimentation (13).

11. Dispositif selon la revendication 10, caractérisé en ce que la chicane (15) présente la forme d'un cône dont le sommet est dirigé vers le bas.

12. Dispositif selon l'une des revendications 5 à 11, caractérisé en ce que le fond perforé (3) est réalisé en forme de cône.
